# FASCICULE DE BREVET EUROPEEN

(11) **EP 2 049 928 B1**
(45) Date de publication et mention de la délivrance du brevet: **09.06.2010**
(21) Numéro de dépôt: 07823356.6
(22) Date de dépôt: 27.07.2007
(51) Int. Cl.: G02B 6/00, F21V 8/00

(54) **DISPOSITIF DE PRODUCTION DE LUMIERE ET SES APPLICATIONS A L'ECLAIRAGE ET A LA SIGNALETIQUE LUMINEUSE**
VORRICHTUNG ZUR LICHTPRODUKTION UND IHRE ANWENDUNG ZUR BELEUCHTUNG SOWIE BELEUCHTETES SCHILD
DEVICE FOR PRODUCING LIGHT AND ITS APPLICATIONS TO LIGHTING AND LIGHTED SIGNAGE

(30) Priorité: 27.07.2006 FR 0606894
(43) Date de publication de la demande: 22.04.2009
(60) Demande divisionnaire: 10160724.0
(73) Titulaire: Regenerer, 59200 Tourcoing (FR); OSYRIS R6D, 59650 Villeneuve D'Ascq Cedex (FR)
(72) Inventeur: ZEMMOURI, Jaouad, F-59510 Hem (FR); RINGOT, Jean, F-59370 Mons-en-Baroeul (FR)
(74) Mandataire: Matkowska, Franck
(86) Numéro de dépôt international: PCT/FR2007/001299
(87) Numéro de publication internationale: WO 2008/012447

(56) Documents cités:
- WO-A-00/16006
- DE-A1- 10 162 760
- DE-A1- 19 817 570
- US-A1- 5 555 161
- US-B1- 6 337 946

## Description

### Domaine technique

La présente invention concerne un dispositif de production de lumière constituant une nouvelle source de lumière étendue. Elle trouve principalement ses applications dans le domaine de l'éclairage et dans le domaine de la signalétique lumineuse en tant que source lumineuse étendue utilisée par exemple en rétro-éclairage ou mise en forme pour constituer une information lumineuse.

### Art antérieur

Dans le domaine de l'éclairage et dans le domaine de la signalétique lumineuse, il est usuel d'utiliser des tubes fluorescents au néon comme sources de lumière étendues et homogènes. En particulier, dans le domaine de la signalétique lumineuse, les enseignes lumineuses dites « drapeau », du type croix de pharmacie ou équivalent, sont destinées à être fixées sur un support extérieur (mur ou équivalent), en étant orientées perpendiculairement à ce support et en étant positionnées sensiblement dans un plan vertical. Ces enseignes lumineuses comportent des tubes au néon qui forment au moins un motif lumineux visible sur les deux faces de l'enseigne. Une enseigne lumineuse double face à tubes au néon, de type croix de pharmacie, est décrite par exemple dans les demandes de brevet français FR 2 765 996 et FR 2 776 810. Egalement dans d'autres types d'enseignes lumineuses, on peut utiliser les tubes au néon pour réaliser un éclairage arrière (rétro-éclairage) d'un support translucide portant une information ou un motif mis en évidence par le rétro-éclairage

Les tubes au néon présentent toutefois au moins deux inconvénients majeurs. Ils contiennent un gaz toxique, ce qui complique leur recyclage, et leur fabrication est complexe du fait de la nécessité de fabriquer un tube contenant un gaz sous vide.

On a par ailleurs proposé dans la demande de brevet internationale WO 93/24787, une source de lumière comportant un élément lumineux associé à un guide d'ondes tubulaire et rectiligne, et à un élément absorbeur permettant d'absorber les rayons lumineux qui présentent un angle d'émission supérieur à un angle prédéfini. Dans ce type de source lumière, les ondes lumineuses se propagent par réflexions successives à l'intérieur de la cavité centrale du guide tubulaire. Ce type de source de lumière peut convenir lorsque le guide d'onde tubulaire est rectiligne. En revanche, ce type de source de lumière est inadapté lorsque le guide n'est pas rectiligne, mais présente par exemple des courbes. En effet, dans les courbes, une partie des rayons lumineux s'échappe du guide d'ondes, au détriment du rendement lumineux de ce type de source. Au surplus, l'élément absorbeur entraîne une perte importante de rendement lumineux. Un dispostif d'illumination comportant un guide d'onde tubulaire muni d'une enveloppe guidante est connu de US 6 337 946 et DE 10 162 760.

### Objectifs de l'invention

La présente invention vise à proposer une nouvelle source étendue de lumière qui pallie les inconvénients précités des tubes au néon, et qui peut notamment se substituer aux tubes au néon.

Un autre objectif de l'invention est de proposer une source de lumière étendue qui peut selon le cas être rectiligne ou présenter une forme courbe plus ou moins complexe.

### Résumé de l'invention

Cet objectif est atteint au moyen d'un dispositif de production de lumière de la revendication 1. Ce dispositif comporte au moins une première source lumineuse associée à un guide d'ondes principal ; le guide d'ondes principal comporte une enveloppe de propagation de la lumière qui présente un indice de réfraction (n1) supérieur à l'indice de réfraction (n2) de la partie interne du guide principal en contact avec l'enveloppe. Le dispositif comporte en outre :
- des moyens optiques d'injection qui sont distincts du guide d'ondes principal, et dont la longueur (d) est inférieure à la longueur du guide d'ondes principal, et qui permettent d'injecter dans ladite enveloppe du guide d'ondes principal, une partie au moins de la lumière produite, et
- des moyens de diffusion qui sont aptes à diffuser vers l'extérieur de l'enveloppe, sur au moins une portion de l'enveloppe de longueur L prédéfinie, une partie au moins de la lumière circulant dans l'enveloppe du guide principal.

Plus particulièrement, mais non nécessairement, le dispositif de l'invention comporte les caractéristiques additionnelles et facultatives mentionnées dans les revendications 2 à 18.

Selon un autre aspect de l'invention, le dispositif de production de lumière comporte au moins une première source lumineuse associée à un guide d'ondes principal ; le guide d'ondes principal comporte une enveloppe de propagation de la lumière qui présente un indice de réfraction (n1) supérieur à l'indice de réfraction (n2) de la partie interne du guide principal en contact avec l'enveloppe. La source lumineuse forme un anneau de lumière positionné devant l'entrée du guide d'ondes principal, en sorte que la lumière produite est injectée directement dans l'enveloppe du guide d'ondes. Le dispositif comporte en outre des moyens de diffusion qui sont aptes à diffuser vers l'extérieur de l'enveloppe, sur au moins une portion de l'enveloppe de longueur L prédéfinie, une partie au moins de la lumière circulant dans l'enveloppe du guide principal.

Plus particulièrement, pour la formation de cet anneau de lumière, dans une variante de réalisation la source lumineuse comporte une pluralité d'éléments lumineux agencés sous la forme d'un anneau. Dans une deuxième variante de réalisation, la source lumineuse est associée à un moyen optique de collimation, par exemple un réflecteur, qui permet de collimateur les rayons lumineux produits par la source sous la forme d'un anneau de lumière.

L'invention a également pour autre objet l'utilisation du dispositif de production de lumière visé précédemment comme moyen d'éclairage direct, ou comme moyen de rétro-éclairage, ou comme moyen de signalétique lumineuse.

L'invention a pour autre objet un dispositif de signalétique lumineuse, et notamment une enseigne lumineuse (formant par exemple une croix de pharmacie), comportant au moins un dispositif de production de lumière visé précédemment.

### Brève description des dessins

On a représenté sur les dessins annexés plusieurs variantes préférées de réalisation d'un dispositif de production de lumière conforme à l'invention, lesquelles variantes sont données à titre d'exemples non exhaustifs et non limitatifs de l'invention. Sur les dessins annexés :
- la figure 1 est une vue en coupe longitudinale d'une première variante de réalisation d'un dispositif de production de lumière de l'invention,
- la figure 2 représente le faisceau lumineux annulaire incident produit par la source lumineuse du dispositif de la figure 1, au niveau de l'entrée de ce faisceau lumineux dans le guide d'ondes,
- la figure 3 est une vue en coupe transversale du dispositif de la figure 1 selon le plan III-III,
- la figure 4 représente de manière schématique le trajet des rayons lumineux à l'intérieur de la paroi de l'injecteur du dispositif de la figure 1,
- la figure 5 est une vue en coupe longitudinale d'une deuxième variante de réalisation d'un dispositif de production de lumière de l'invention,
- la figure 6 est une vue en coupe longitudinale d'une troisième variante de réalisation d'un dispositif de production de lumière de l'invention,
- la figure 7 est une vue de face d'une source lumineuse comportant des diodes agencées en anneau,
- la figure 8 est une vue en coupe longitudinale d'une quatrième variante de réalisation d'un dispositif de production de lumière de l'invention, mettant en oeuvre la source de la figure 7, et ne comportant pas de moyens optiques d'injection,
- la figure 9 est une vue en coupe longitudinale d'une cinquième variante de réalisation d'un dispositif de production de lumière de l'invention,
- la figure 10 est une vue en coupe longitudinale d'une sixième variante de réalisation d'un dispositif de production de lumière de l'invention,
- la figure 11 est une vue en coupe longitudinale d'une septième variante de réalisation d'un dispositif de production de lumière de l'invention, mettant en oeuvre un axicon à lentille cylindrique unique,
- la figure 12 est une vue en coupe longitudinale d'une huitième variante de réalisation d'un dispositif de production de lumière de l'invention, mettant en oeuvre un axicon à double lentilles cylindriques.

### Description détaillée

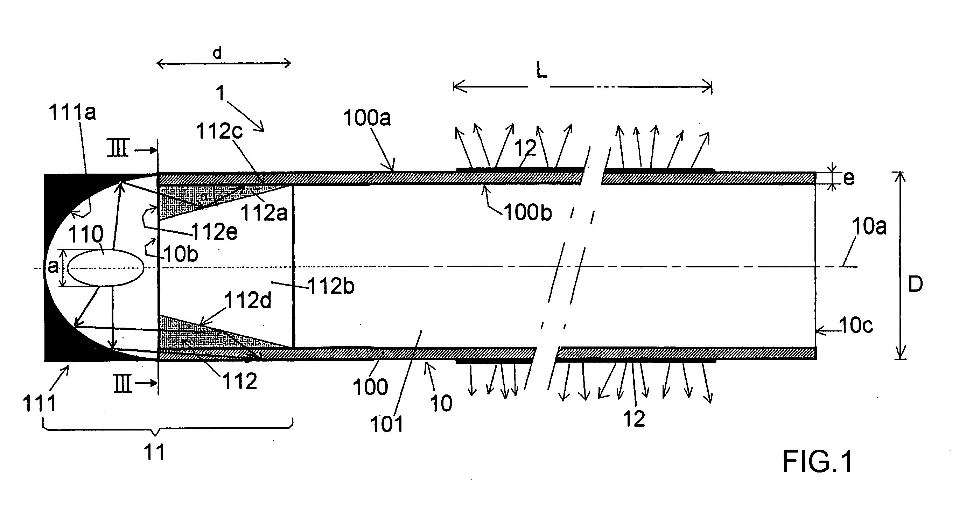

On a représenté sur la figure 1, un premier exemple particulier de réalisation d'un dispositif de production de lumière 1 conforme à l'invention. Ce dispositif 1 comporte un guide d'ondes principal 10 qui est associé à une source lumineuse 11.

Dans la variante particulière de réalisation de l'invention, le guide d'ondes 10 est constitué par un tube creux, ayant de préférence une section transversale circulaire et présentant un axe central de symétrie 10a. Ce tube 10 comporte une paroi tubulaire 100 d'épaisseur e. La cavité intérieure 101 du tube 10 contient de l'air. La paroi 100 du tube 10 est réalisée dans un matériau présentant un indice de réfraction n1 supérieur à l'indice n2 de réfraction de la partie de la cavité 101 en contact avec la paroi 100, c'est-à-dire en l'occurrence de l'air (n2=1). Cette paroi 100 a pour fonction de servir d'enveloppe de guidage et de propagation de la lumière. La paroi 100 est de préférence réalisée dans tout matériau transparent dans la gamme de longueur d'ondes du visible (entre 400nm et 800nm). Par exemple, la paroi 100 du tube 10 est en verre ou dans un matériau polymère.

La source lumineuse 11 comporte une source lumineuse ponctuelle 110 émettant de préférence dans la gamme de longueur d'ondes du visible (entre 400nm et 800nm), et associée à un réflecteur 111. La source lumineuse 110 ponctuelle est positionnée à proximité de l'une 10b des faces d'extrémité du tube 10, en étant de préférence centrée sur l'axe central 10a de symétrie du tube 10. La source lumineuse ponctuelle 110 est constituée par exemple par une ampoule, ou ensemble d'ampoules, par une diode électroluminescente ou ensemble de diodes électroluminescentes, ou par tout élément lumineux ou ensemble d'éléments lumineux.

On désigne dans le présent texte par source lumineuse « ponctuelle », une source lumineuse dont la dimension transversale (a) est inférieure à la dimension D (diamètre du tube 10) de la section transversale du guide d'ondes 10.

Le réflecteur 111 comporte une surface réfléchissante 111a, qui est de préférence, mais non nécessairement, de forme parabolique. Cette surface réfléchissante 111a est par un exemple un miroir métallique. La source lumineuse ponctuelle 110 est positionnée entre cette surface réfléchissante 111a et la face d'extrémité 10b du tube 10. La surface réfléchissante 111 a présente de préférence un axe central de symétrie et est centrée par rapport au tube 10, l'axe central de symétrie de la surface réfléchissante 111a étant confondu avec l'axe central de symétrie 10a du tube.

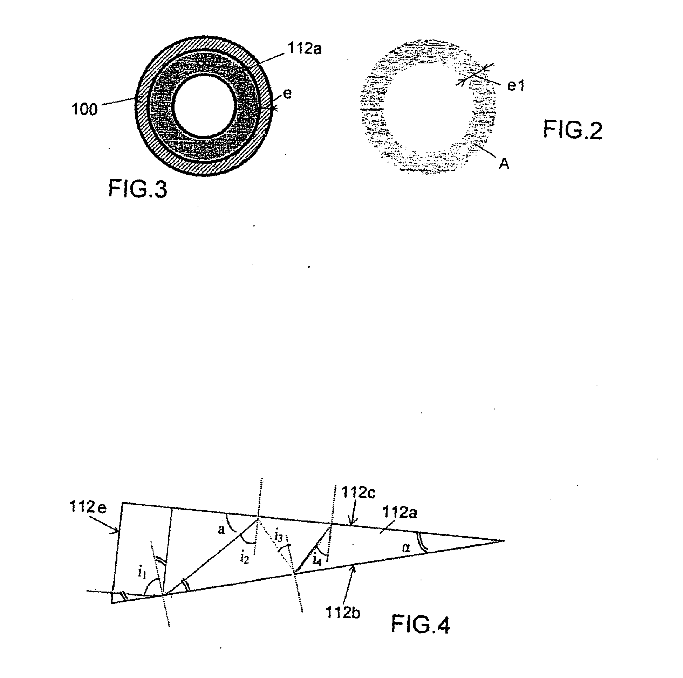

En fonctionnement, les rayons lumineux produits par la source lumineuse ponctuelle 110 sont réfléchis et collimatés en direction de la face d'extrémité 10b du tube 10 sous la forme d'un anneau de lumière (A), qui est centré par rapport au tube 10 et qui est représenté sur la figure 2.

Dans cet exemple particulier de réalisation de la figure 1, la source lumineuse 11 comporte également des moyens optiques d'injection 112 de longueur (d) faible et inférieure à la longueur du guide d'ondes 10. Dans cet exemple particulier, les moyens optiques d'injection sont constitués par un injecteur 112 réalisé sous la forme d'un insert monobloc creux. Cet insert 112 est de préférence réalisé dans un matériau présentant un indice de réfraction n3 inférieur à l'indice de réfraction n1 de la paroi 100 du guide 10, et est emboîté dans le guide 10 au niveau de son extrémité 10b. Cet insert 112 présente un axe central de symétrie et est centré sur l'axe central de symétrie 10a du tube 10. Cet insert 112 est une pièce creuse comportant une paroi 112a dont l'épaisseur décroît sensiblement linéairement (figure 1/angle a entre la face externe cylindrique 112c et la face interne 112d de l'injecteur 112) depuis la face d'entrée 10b du guide 10, une cavité interne 112b contenant de l'air et de forme tronconique, et une surface externe 112c cylindrique. La surface externe 112c de l'insert 112 est en contact sur toute la longueur de l'insert 112 avec la face interne 100b de la paroi 100 du guide 10.

Dans une autre variante de réalisation, il est également possible d'utiliser un insert 112 présentant un indice de réfraction n3 supérieur à l'indice de réfraction n1 de la paroi 100 du guide 10. Dans ce cas, on prévoit entre la face externe 112c de l'insert et la face interne 100b de la paroi 100 du guide 10, une fine couche intermédiaire réalisée dans un matériau, qui présente un indice de réfraction inférieur à l'indice de réfraction de la paroi 100 du guide 10. Cette fine couche intermédiaire se présente par exemple sous la forme d'une colle ou d'un gel, ou sous la forme d'un film. Dans cette variante, l'injecteur est constitué par l'insert 112 et par cette couche intermédiaire d'adaptation d'indice à l'interface entre l'insert 112 et la paroi 100.

D'une manière générale, l'injecteur 112 est conçu et agencé par rapport au tube 10 et par rapport à l'ensemble source lumineuse 110/réflecteur 111, de telle sorte que le faisceau lumineux incident A délivré par cet ensemble est guidé et introduit au moins en partie dans la paroi 100 du tube 10.

De préférence, l'injecteur 112 est conçu et agencé par rapport au tube 10 et à l'ensemble source lumineuse 110/réflecteur 111, de telle sorte qu'un maximum de puissance lumineuse incidente délivrée par la source lumineuse 11 soit introduite dans la paroi 100 du guide 10, et notamment qu'au moins 50%, et plus préférentiellement encore au moins 70%, de la puissance lumineuse incidente délivrée par la source lumineuse 11 soit introduite dans la paroi 100 du guide 10.

On a représenté sur la figure 3, la section transversale du tube 10 et de l'injecteur 112. En comparant cette figure 3 avec l'anneau de lumière de la figure 2, on peut noter que l'épaisseur (e1) de l'anneau lumineux A est supérieure à l'épaisseur (e) de la paroi du tube 10. L'injecteur 112 permet de guider par réflexions successives internes (voir figure 4), les rayons lumineux correspondant à cet anneau de lumière A, en sorte de les amener progressivement à l'intérieur de la paroi 100 du tube 10.

Lorsqu'un rayon lumineux produit par la source 11 pénètre dans la paroi 112a l'injecteur 112, il se propage dans la paroi 112a de cet injecteur par réflexions successives jusqu'à ce que la condition de réflexion totale ne soit plus satisfaite (figure 4).

Des études ont été menées sur l'injecteur 112 pour déterminer quel était l'angle a permettant d'obtenir le meilleur rendement d'injection, c'est-à-dire permettant d'introduire dans la paroi 101 du tube 10 la puissance lumineuse maximale pour une source 11 donnée.

Ces études ont montré qu'avec un injecteur constitué d'un insert 112 dans un matériau de type PMMA (Polyméthacrylate de méthyle) / indice de réfraction n3 valant 1,49) ou de type polycarbonate (indice de réfraction n3 valant 1,58), et d'une couche intermédiaire d'indice de réfraction de l'ordre par exemple de 1,45, et avec un tube 10 dans un matériau de type verre (Pyrex® /indice de réfraction n1 valant 1,47), il est préférable que l'angle α soit inférieur ou égal à 11 et de préférence sensiblement égal à 11°, en sorte de bénéficier, dès la deuxième réflexion (i2) [figure 4] d'un transfert de puissance lumineuse dans la paroi 100 du tube 10.

Une fois les faisceaux lumineux introduits dans la paroi 100 du tube 10, ils se propagent dans cette paroi par réflexions totales successives du fait de la différence entre les d'indices de réfraction n1 de la paroi 100 du tube 10 et n2 de l'air. La paroi 100 du tube 10 fait ainsi office de guide d'ondes. Tant que le tube 10 ne présente pas de défaut de surface ou de particules dans la paroi 100 qui constituent des obstacles aboutissant à une diffusion de la lumière, toute la lumière se propage dans la paroi 100 du tube 10 sans sortir de cette paroi.

Selon l'application, le tube 10 peut être rectiligne sur toute sa longueur ou avoir une forme courbe plus ou moins complexe.

De manière avantageuse selon l'invention, la propagation des rayons lumineux étant réalisée par réflexions multiples dans la paroi 100 du tube de faible épaisseur (e), lorsque le tube présente au moins une partie courbe, l'angle d'incidence des rayons lumineux reste inférieur à l'angle limite de propagation dans cette partie courbe, et ces rayons lumineux ne sortent pas de la paroi 100 du tube 10, tant que ladite paroi ne comporte pas de moyen de diffusion de la lumière.

De préférence, l'épaisseur (e) de la paroi 100 du tube 10 est comprise entre 1 mm et 3mm.

Pour que le dispositif 1 puisse faire office de source de lumière étendue, on associe au tube 10 au moins des moyens de diffusion 12 qui s'étendent sur une longueur L donnée, et qui sont de préférence localisés en dehors de la région d'injection des moyens optiques d'injection 112..

Ces moyens de diffusion 12 peuvent prendre plusieurs formes de réalisation, l'essentiel étant qu'ils permettent d'obtenir une diffusion de la lumière depuis l'intérieur de la paroi 100 du tube 10 vers l'extérieur du tube 10.

Ces moyens de diffusion 12 peuvent comporter des éléments diffusants (par exemple sous forme de peinture, revêtement, poudre...) appliqués sur la surface externe 100a de la paroi 100 du tube 10, et/ou sur la surface interne 100b de la paroi 100 du tube 10. L'application d'éléments diffusants (par exemple sous forme de peinture, revêtement, poudre...) sur la surface interne 100b de la paroi 100 du tube 10 permet avantageusement de protéger ces d'éléments diffusants.

Ces moyens de diffusion 12 peuvent également comporter des éléments diffusants (par exemple particules métalliques, bulles d'air) à l'intérieur de la paroi 100 du tube 10.

Ces moyens de diffusion 12 peuvent également se présenter sous la forme de rugosités ou irrégularités de surface.

Selon l'application, les moyens de diffusion 12 peuvent s'étendre sur une seule zone de diffusion de longueur L prédéfinie, ou sur plusieurs zones distinctes et espacées selon la longueur du tube 10.

Lorsque l'on souhaite obtenir une source lumineuse, non seulement étendue, mais également homogène, il convient de concevoir les moyens de diffusion 12 en sorte d'obtenir une lumière uniforme (intensité lumineuse sensiblement constante) sur toute la surface de diffusion correspondant à ces moyens 12.

Plusieurs solutions techniques peuvent être mises en oeuvre pour obtenir une diffusion homogène. Deux solutions sont données ci-après à titre d'exemples non exhaustifs et non limitatifs de l'invention.

On peut distribuer les éléments diffusants des moyens de diffusion 12, de telle sorte que leur concentration soit sensiblement constante sur toute la surface de diffusion (de longueur L) des moyens de diffusion 12 ; par exemple, on applique une couche de peinture d'épaisseur constante, ou on applique de la poudre avec un poids constant par unité de surface. Dans ce cas, la concentration est de préférence faible.

On peut également moduler la concentration d'éléments diffusants en fonction de leur éloignement par rapport à la source lumineuse 11, c'est-à-dire augmenter la concentration avec la distance en sorte de compenser la perte de puissance lumineuse incidente.

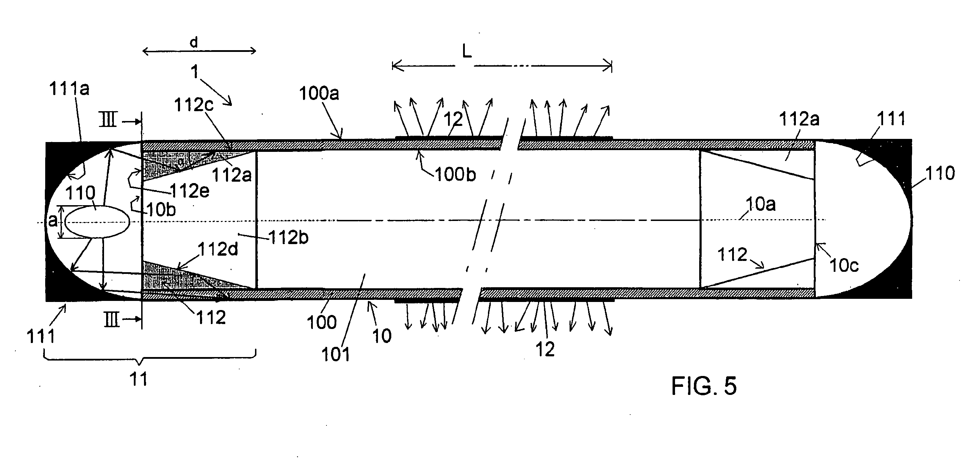

De préférence selon l'invention, pour améliorer le rendement lumineux, il est préférable, conformément à la variante de la figure 5, d'associer au tube 10 un deuxième réflecteur 111, qui est monté à l'extrémité 10c du tube 10 opposé à la source 110, et qui peut par exemple être identique au premier réflecteur 111. Ce deuxième réflecteur 111 permet de diminuer les pertes lumineuses, en réfléchissant en direction du tube 10 les rayons lumineux s'échappant de l'extrémité 10c du tube. Plus préférentiellement encore, on associe à ce deuxième réflecteur 111 un . deuxième injecter 112 (figure 5), qui remplit, vis à vis des rayons lumineux réfléchis par le deuxième réflecteur 111 à l'extrémité 10c du tube 10, la même fonction que le premier injecteur 112 vis-à-vis des rayons lumineux incidents délivrés par la source 110.

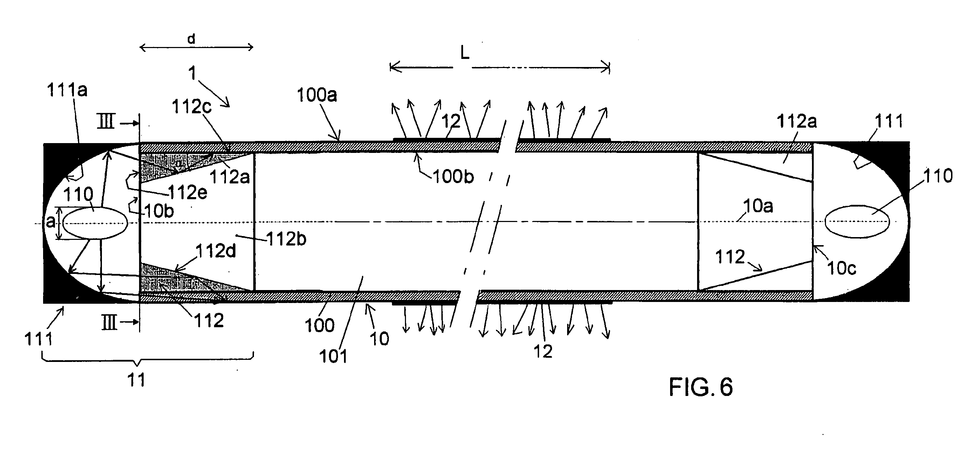

Plus préférentiellement encore, dans une variante perfectionnée de réalisation, telle que celle illustrée sur la figure 6, on améliore le dispositif de la figure 5, en ajoutant une deuxième source lumineuse ponctuelle 110 supplémentaire entre le deuxième réflecteur 111 et l'extrémité 10c du tube 10.

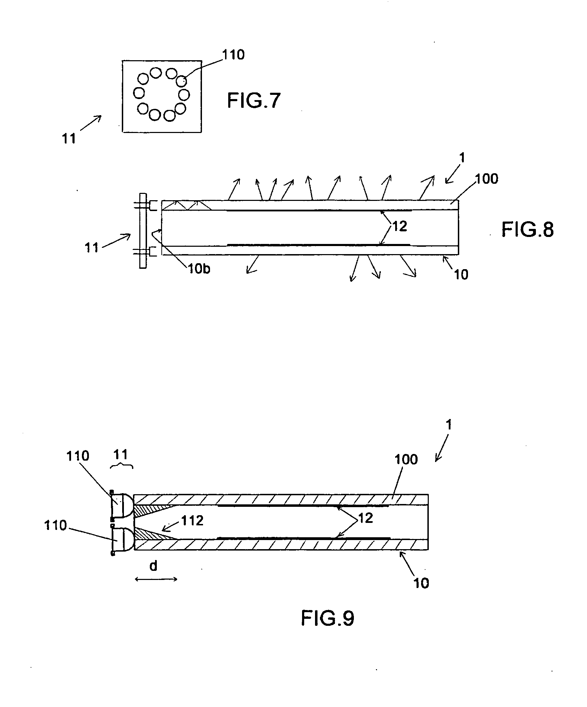

On a représenté sur les figures 7 et 8, une autre variante de réalisation qui n'est pas converte par les revendications dans laquelle la source lumineuse 11 comporte une pluralité d'éléments lumineux 110, tels que des diodes électroluminescentes, agencés en sorte de former un anneau. Cet anneau de diodes électroluminescentes 110 est positionné devant l'entrée 10b du guide 10, les diodes 110 étant positionnées au droit et sensiblement au contact de la paroi 100 du guide 10. Dans cette variante de réalisation, les diodes 110 présentent un angle d'émission faible, par exemple de l'ordre de 30°, de telle sorte que la lumière produite est injectée directement dans la paroi 100 du guide 10, sans qu'il soit nécessaire de mettre en oeuvre un injecteur 112 ou équivalent comme dans la variante de la figure 1.

On a représenté sur la figure 9, une autre variante de réalisation dans laquelle la source lumineuse 11 comporte également une pluralité d'éléments lumineux 110, tels que des diodes électroluminescentes, qui sont agencés également en sorte de former un anneau, mais qui, à la différence de la variante de la figure 8, se caractérisent par un angle de d'émission important (par exemple de l'ordre de 90°) et/ou une largeur d'émission supérieure à l'épaisseur (e) de la paroi 100 du guide 10. Dans ce cas, de manière identique à ce qui a été décrit pour la variante de la figure 1, on met en oeuvre un injecteur 112.

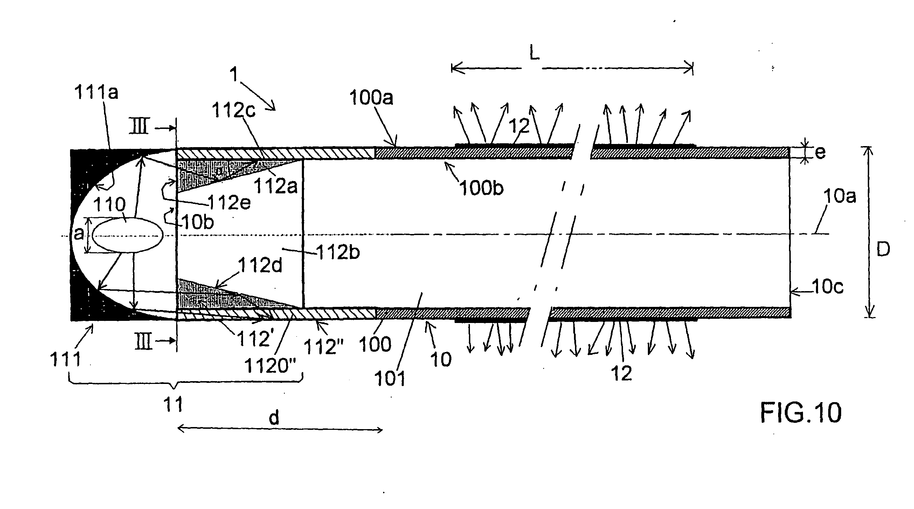

On a représenté sur la figure 10, une autre variante de réalisation dans laquelle les moyens optiques d'injection 112 sont constitués de deux éléments 112' et 112". Le premier élément 112' est identique à l'injecteur 112 précédemment décrit pour la variante de la figure 1. Le deuxième élément 112" est un guide tubulaire creux intermédiaire, de même diamètre et de même épaisseur de paroi que le guide 10. Ce guide 112" est positionné à l'extrémité du guide principal 10 et prolonge ce guide 10. Le premier élément 112' est emboîté à l'intérieur du guide intermédiaire 112". Le premier élément 112' et le guide intermédiaire 112" sont réalisés dans des matériaux différents, présentant des indices de réfraction différents. L'indice de réfraction n3 du premier élément est de préférence inférieur à l'indice de réfraction n'3 de la paroi 1120" du guide intermédiaire 112", et cet indice n'3 de la paroi 1120" du guide intermédiaire 112" est de préférence proche de l'indice de réfraction n1 de la paroi 100 du guide principal 10. Par exemple, et de manière non limitative de l'invention, le premier élément 112' est en PPMA avec un indice de réfraction n3 valant 1,49 ; le guide intermédiaire 112" est en polycarbonate avec un indice de réfraction n'3 valant 1,58; la paroi 100 du guide 10 est en verre avec un indice de réfraction n1 valant 1,47.

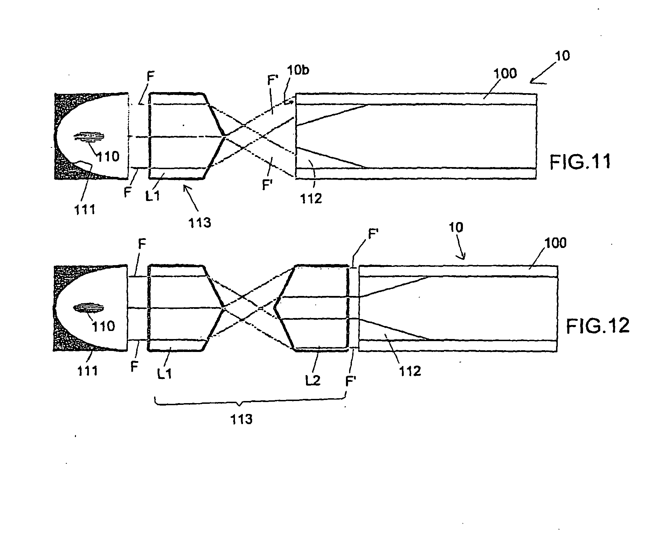

On a représenté sur la figure 11, une autre variante de réalisation dans laquelle les moyens optiques d'injection comportent, en plus de l'injecteur 1.2, un axicon 113 interposé entre l'ensemble source lumineuse ponctuelle 110/réflecteur 111, et l'entrée de l'injecteur 112. Cet axicon 113 est aligné avec le guide principal 10 et l'injecteur 112, et permet de transformer le faisceau d'entrée (F) produit par la source lumineuse ponctuelle 110 associée au réflecteur 111, en un faisceau de sortie F' de forme annulaire. Dans la variante de la figure 11, l'axicon 113 est constitué d'une seule lentille cylindrique L1, le faisceau secondaire F' n'étant pas collimaté.

On a représenté sur la figure 12, une autre variante de réalisation dans laquelle les moyens optiques d'injection comportent un axicon 113 à double lentilles cylindriques L1 et L2. La structure de l'axicon 113 de la variante de la figure 12, est plus complexe que celle de la variante de la figure 11, mais le faisceau de sortie F' de la de la variante de la figure 12 est avantageusement collimaté.

Le dispositif de production de lumière de l'invention peut être utilisé dans toutes les applications, où il est nécessaire de disposer d'une source de lumière étendue et de préférence (mais pas nécessairement) homogène. Il peut être utilisé comme moyen d'éclairage direct. Il peut être utilisé d'une manière générale dans tout dispositif de signalétique lumineuse. En particulier, il peut être utilisé pour réaliser des enseignes lumineuses, et par exemple des croix de pharmacie, soit en étant utilisé directement pour réaliser le motif lumineux, soit comme moyen de rétro-éclairage ( éclairage par l'arrière d'un support translucide portant un motif). En particulier, mais pas seulement, le dispositif de l'invention peut être avantageusement utilisé pour remplacer les tubes à néons, dans toutes les applications où ce type de tube est mise en oeuvre à ce jour.

L'invention n'est pas limitée aux variantes particulières de réalisation des figures annexées. En particulier et de manière non exhaustive, Le guide d'ondes principal 10 peut être rigide ou souple (de type fibre optique), et selon l'application être rectiligne ou présenter une forme courbe plus ou moins complexe. Le guide d'ondes principal 10 n'est pas nécessairement un tube creux mais peut être remplacé par tout guide d'ondes comportant une enveloppe de guidage et de propagation de la lumière et une partie interne réalisée dans un ou plusieurs matériaux ou fluides différents du matériau constituant ladite enveloppe, l'intérieur du guide 10 ne contenant pas nécessairement de l'air. De la même manière, la cavité interne 112a de l'injecteur 112 ne contient pas nécessairement de l'air, mais peut être réalisée dans un matériau ou contenir un fluide dont l'indice de réfraction est inférieur à l'indice de réfraction n3 de la paroi 112a de l'insert 112.

## Revendications

1. Dispositif (1) de production de lumière comportant au moins une première source lumineuse associée à un guide d'ondes principal (10), le guide d'ondes principal (10) comportant une enveloppe (100) de propagation de la lumière qui présente un indice de réfraction (n1) supérieur à l'indice de réfraction (n2) de la partie interne (101) du guide principal en contact avec l'enveloppe (100), **caractérisé en ce que** le dispositif comporte des moyens optiques d'injection (112) qui sont distincts du guide d'ondes principal (10) et disposés entre la source lumineuse et le guide d'onde principal (10), dont la longueur (d) est inférieure à la longueur du guide d'ondes principal (10), et qui permettent d'injecter dans ladite enveloppe (100) du guide d'ondes principal (10) une partie au moins de la lumière produite, et des moyens de diffusion (12) qui sont aptes à diffuser vers l'extérieur de l'enveloppe (100), sur au moins une portion de l'enveloppe (100) de longueur L prédéfinie, une partie au moins de la lumière circulant dans l'enveloppe (100) du guide principal (10).

2. Dispositif de production de lumière selon la revendication 1, **caractérisé en ce que** le guide d'ondes principal (10) comprend un tube creux dont la paroi (100) forme l'enveloppe de propagation de la lumière.

3. Dispositif de production de lumière selon la revendication 1 ou 2, **caractérisé en ce que** les moyens optiques d'injection (112) sont conçus pour injecter dans ladite enveloppe (100) du guide d'ondes principal (10) au moins 50%, et de préférence au moins 70%, de la lumière produite par la source lumineuse (11).

4. Dispositif de production de lumière selon l'une des revendications 1 à 3, **caractérisé en ce que** les moyens optiques d'injection (112) comportent un injecteur (112 ; 112') permettant de guider par réflexions internes successives une partie au moins des faisceaux lumineux produits par la source lumineuse (11).

5. Dispositif de production de lumière selon la revendication 4, **caractérisé en ce que** l'injecteur comprend un insert (112 ; 112').

6. Dispositif de production de lumière selon la revendication 5, **caractérisé en ce que** l'insert (112 ; 112') comporte une cavité interne tronconique (112b), et dont l'épaisseur de paroi (112a) est décroissante sensiblement linéairement depuis la face d'entrée (10b) du guide principal (10).

7. Dispositif de production de lumière selon la revendication 6, **caractérisé en ce que** la face externe (112c) de l'insert (112 ; 112') est cylindrique, et **en ce que** l'angle α de l'insert (112 ; 112') entre la face externe cylindrique (112c) et la face interne (112d) de l'insert (112 ; 112') est inférieur ou égal à 11° et de préférence sensiblement égal à 11°.

8. Dispositif de production de lumière selon l'une des revendications 6 ou 7, **caractérisé en ce que** l'indice de réfraction (n3) de l'insert (112) est inférieur à l'indice de réfraction (n1) de l'enveloppe (100) du guide d'ondes principal (10).

9. Dispositif de production de lumière selon l'une des revendications 6 ou 7, **caractérisé en ce que** l'indice de réfraction (n3) de l'insert (112) est supérieur à l'indice de réfraction (n1) de l'enveloppe (100) du guide d'ondes principal (10), et **en ce que** l'injecteur comporte une couche intermédiaire d'adaptation d'indice à l'interface entre l'insert (112) et le guide (10), ladite couche présentant un indice de réfraction inférieur à l'indice de réfraction (n1) de l'enveloppe (100) du guide d'ondes principal (10).

10. Dispositif de production de lumière selon l'une des revendications 1 à 9, **caractérisé en ce que** les moyens optiques d'injection (112) comportent un guide intermédiaire (112") qui comprend une enveloppe de propagation (1120") avec un indice de réfraction (n'3) supérieur à l'indice de réfraction de la partie interne du guide intermédiaire (112") en contact avec l'enveloppe (1120"), et supérieur à l'indice de réfraction (n1) de l'enveloppe (100) du guide d'ondes principal (10), ledit guide intermédiaire (112") étant interposé entre l'insert (112') et le guide d'ondes principal (10).

11. Dispositif de production de lumière selon l'une des revendications 1 à 10, **caractérisé en ce qu'**au moins la première source lumineuse (11) forme un anneau de lumière (A).

12. Dispositif de production de lumière selon l'une des revendications 1 à 11, **caractérisé en ce qu'**au moins la première source lumineuse (11) comporte une source lumineuse ponctuelle (110) associée à un réflecteur (111), qui permet de collimater les rayons lumineux produits par la source ponctuelle sous la forme d'un anneau de lumière (A).

13. Dispositif de production de lumière selon l'une des revendications 1 à 12, **caractérisé en ce qu'**il comporte au moins un deuxième réflecteur (111) monté à l'extrémité (10c) du guide principal (10) opposé à la première source lumineuse (11), un deuxième injecteur (112) associé au deuxième réflecteur (111), et une deuxième source lumineuse ponctuelle (110) associée au deuxième réflecteur (111).

14. Dispositif de production de lumière selon l'une des revendications 1 à 13, **caractérisé en ce que** les moyens de diffusion (12) sont localisés en dehors de la région d'injection des moyens optiques d'injection (112).

15. Utilisation du dispositif de production de lumière visé à l'une des revendications 1 à 14 comme moyen d'éclairage direct

16. Utilisation du dispositif de production de lumière visé à l'une des revendications 1 à 14 comme moyen de rétro-éclairage.

17. Utilisation du dispositif de production de lumière visé à l'une des revendications 1 à 14 comme moyen de signalétique lumineuse.

18. Dispositif de signalétique lumineuse, notamment enseigne lumineuse, et plus particulièrement croix de pharmacie, **caractérisé en ce qu'**il comporte au moins un dispositif de production de lumière visé à l'une des revendications 1 à 14.

## Claims

1. Device (1) for producing light including at least one first light source associated with a principal wave guide (10), the principal wave guide (10) including an envelope (100) for the propagation of the light, which has an index of refraction (n1) greater than the index of refraction (n2) of the internal part (101) of the principal guide that is in contact with the envelope (100), **characterised in that** the device includes optical injection means (112), which are separate from the principal wave guide (10) and arranged between the light source and the principal wave guide (10), the length (d) of which is less than the length of the principal wave guide (10), and which allow at least a part of the light produced to be injected into said envelope (100) of the principal wave guide (10), and diffusion means (12) that are suitable for diffusing at least a part of the light circulating in the envelope (100) of the principal guide (10) towards the exterior of the envelope (100), on at least a portion of the envelope (100) with a predefined length L.

2. Device for producing light according to claim 1, **characterised in that** the principal wave guide (10) comprises a hollow tube, the wall (100) of which forms the envelope for the propagation of the light.

3. Device for producing light according to claim 1 or 2, **characterised in that** the optical injection means (112) are designed to inject at least 50%, and preferably at least 70%, of the light produced by the light source (11) into said envelope (100) of the principal wave guide (10).

4. Device for producing light according to one of claims 1 to 3, **characterised in that** the optical injection means (112) include an injector (112; 112') that allows at least a part of the light beams produced by the light source (11) to be guided by successive internal reflections.

5. Device for producing light according to claim 4, **characterised in that** the injector comprises an insert (112; 112').

6. Device for producing light according to claim 5, **characterised in that** the insert (112; 112') includes an internal cavity (112b) in the shape of a truncated cone, the wall (112a) of which has a thickness that decreases substantially linearly from the entrance face (10b) of the principal guide (10).

7. Device for producing light according to claim 6, **characterised in that** the external surface (112c) of the insert (112; 112') is cylindrical, and **in that** the angle α of the insert (112; 112') between the external cylindrical surface (112c) and the internal surface (112d) of the insert (112; 112') is less than or equal to 11°, and preferably substantially equal to 11°.

8. Device for producing light according to one of claims 6 or 7, **characterised in that** the index of refraction (n3) of the insert (112) is less than the index of refraction (n1) of the envelope (100) of the principal wave guide (10).

9. Device for producing light according to one of claims 6 or 7, **characterised in that** the index of refraction (n3) of the insert (112) is greater than the index of refraction (n1) of the envelope (100) of the principal wave guide (10), and **in that** the injector includes an intermediate layer for adaptation of the index at the interface between the insert (112) and the guide (10), said layer having an index of refraction less than the index of refraction (n1) of the envelope (100) of the principal wave guide (10).

10. Device for producing light according to one of claims 1 to 9, **characterised in that** the optical injection means (112) include an intermediate guide (112") that comprises a propagation envelope (1120") with an index of refraction (n'3) greater than the index of refraction of the internal part of the intermediate guide (112") that is in contact with the envelope (1120"), and greater than the index of refraction (n1) of the envelope (100) of the principal wave guide (10), said intermediate guide (112") being interposed between the insert (112') and the principal wave guide (10).

11. Device for producing light according to one of claims 1 to 10, **characterised in that** at least the first light source (11) forms a ring of light (A).

12. Device for producing light according to one of claims 1 to 11, **characterised in that** at least the first light source (11) includes a point light source (110) associated with a reflector (111), which allows the light rays produced by the point source to be collimated in the form of a ring of light (A).

13. Device for producing light according to one of claims 1 to 12, **characterised in that** it includes at least a second reflector (111) mounted at the extremity (10c) of the principal guide (10) that is opposite the first light source (11), a second injector (112) associated with the second reflector (111), and a second point light source (110) associated with the second reflector (111).

14. Device for producing light according to one of claims 1 to 13, **characterised in that** the diffusion means (12) are located outside the injection region of the optical injection means (112).

15. Use of the device for producing light according to one of claims 1 to 14 as a means of direct lighting.

16. Use of the device for producing light according to one of claims 1 to 14 as a means of retro-lighting.

17. Use of the device for producing light according to one of claims 1 to 14 as a means of lighted signage.

18. Lighted signage device, in particular a luminous sign, and more particularly a pharmacy's cross, **characterised in that** it includes at least one device for producing light according to one of claims 1 to 14.

## Patentansprüche

1. **Lichterzeugungsvorrichtung** (1) mit zumindest einer ersten Lichtquelle, der ein Hauptlichtleiter (10) zugeordnet ist, wobei der Hauptlichtleiter (10) einen Lichtausbreitungsmantel (100) aufweist, der einen Brechungsindex (n1) höher als der Brechungsindex (n2) des mit dem Mantel (100) in Kontakt stehenden Innenbereichs (101) des Hauptlichtleiters hat, **dadurch gekennzeichnet, dass** die Vorrichtung optische Einstrahlmittel (112) enthält, die sich von dem Hauptlichtleiter (10) unterscheiden und zwischen der Lichtquelle und dem Hauptlichtleiter (10) angeordnet sind, deren Länge (d) kürzer als die Länge des Hauptlichtleiters (10) ist und mit denen in den Mantel (100) des Hauptlichtleiters (10) zumindest ein Teil des erzeugten Lichts eingestrahlt oder eingeschossen werden kann, sowie Streuungsmittel (12), die zumindest über einen Bereich des Mantels (100) mit vorbestimmter Länge L zumindest ein Teil des im Mantel (100) des Hauptlichtleiters (10) zirkulierenden Lichts nach außerhalb des Mantels (100) streuen können.

2. Lichterzeugungsvorrichtung nach Anspruch 1, **dadurch gekennzeichnet, dass** der Hauptlichtleiter (10) ein Hohlrohr enthält, dessen Wandung (100) den Lichtausbreitungsmantel bildet.

3. Lichterzeugungsvorrichtung nach Anspruch 1 oder 2, **dadurch gekennzeichnet, dass** die optischen Einstrahlmittel (112) dazu ausgelegt sind, zumindest 50 %, vorzugsweise zumindest 70 % des von der Lichtquelle (11) erzeugten Lichts in den Mantel (100) des Hauptlichtleiters (10) einzustrahlen.

4. Lichterzeugungsvorrichtung nach einem der Ansprüche 1 bis 3, **dadurch gekennzeichnet, dass** die optischen Einstrahlmittel (112) eine Düse (112; 112') enthalten, mit der zumindest ein Teil der von der Lichtquelle (11) erzeugten Lichtbündel durch aufeinanderfolgende interne Reflexionen weitergeleitet werden kann.

5. Lichterzeugungsvorrichtung nach Anspruch 4, **dadurch gekennzeichnet, dass** die Düse einen Einsatz (112; 112') enthält.

6. Lichterzeugungsvorrichtung nach Anspruch 5, **dadurch gekennzeichnet, dass** der Einsatz (112; 112') einen kegelstumpfförmigen Innenhohlraum (112b) aufweist, wobei dessen Wandstärke (112a) im Wesentlichen linear von der Eintrittsseite (10b) des Hauptlichtleiters (10) abnimmt.

7. Lichterzeugungsvorrichtung nach Anspruch 6, **dadurch gekennzeichnet, dass** die Außenseite (112c) des Einsatzes (112; 112') zylindrisch ist und dass der Winkel α des Einsatzes (112; 112') zwischen der zylindrischen Außenseite (1112c) und der Innenseite (112d) des Einsatzes (112; 112`) kleiner oder gleich 11° und vorzugsweise im Wesentlichen gleich 11° ist.

8. Lichterzeugungsvorrichtung nach einem der Ansprüche 6 oder 7, **dadurch gekennzeichnet, dass** der Brechungsindex (n3) des Einsatzes (112) kleiner als der Brechungsindex (n1) des Mantels (100) des Hauptlichtleiters (10) ist.

9. Lichterzeugungsvorrichtung nach einem der Ansprüche 6 oder 7, **dadurch gekennzeichnet, dass** der Brechungsindex (n3) des Einsatzes (112) größer als der Brechungsindex (n1) des Mantels (100) des Hauptlichtleiters (10) ist und dass die Düse eine Zwischenschicht zur Anpassung des Index auf die Schnittfläche zwischen Einsatz (112) und Lichtleiter (10) aufweist, wobei die Schicht einen Brechungsindex kleiner als der Brechungsindex (n1) des Mantels (100) des Hauptlichtleiters (10) hat.

10. Lichterzeugungsvorrichtung nach einem der Ansprüche 1 bis 9, **dadurch gekennzeichnet, dass** die optischen Einstrahlmittel (112) einen Zwischenlichtleiter (112") aufweisen, der einen Ausbreitungsmantel (1120") mit einem Brechungsindex (n'3) größer als der Brechungsindex des mit dem Mantel (1120") in Kontakt stehenden Innenbereichs des Lichtleiters (112") und größer als der Brechungsindex (n1) des Mantels (100) des Hauptlichtleiters (10) aufweist, wobei der Zwischenlichtleiter (112") zwischen dem Einsatz (112') und dem Hauptlichtleiter (10) eingefügt ist.

11. Lichterzeugungsvorrichtung nach einem der Ansprüche 1 bis 10, **dadurch gekennzeichnet, dass** zumindest die erste Lichtquelle (11) einen Lichtring (A) bildet.

12. Lichterzeugungsvorrichtung nach einem der Ansprüche 1 bis 11, **dadurch gekennzeichnet, dass** zumindest die erste Lichtquelle (11) eine Punktlichtquelle (110) aufweist, der ein Reflektor (111) zugeordnet ist, mit dem von der Punktlichtquelle erzeugte Lichtstrahlen in Form von einem Lichtring (A) projiziert werden können.

13. Lichterzeugungsvorrichtung nach einem der Ansprüche 1 bis 12, **dadurch gekennzeichnet, dass** sie zumindest einen zweiten Reflektor (111) aufweist, der an dem der ersten Lichtquelle (11) entgegengesetzten Ende (10c) des Hauptlichtleiters (10) montiert ist, sowie eine zweite Düse (112), die dem zweiten Reflektor (111) zugeordnet ist, und eine zweite Punktlichtquelle (110), welcher der zweite Reflektor (111) zugeordnet ist.

14. Lichterzeugungsvorrichtung nach einem der Ansprüche 1 bis 13, **dadurch gekennzeichnet, dass** die Streuungsmittel (12) außerhalb des Einstrahlbereichs der optischen Einstrahlmittel (112) vorgesehen sind.

15. Verwendung der Lichterzeugungsvorrichtung nach einem der Ansprüche 1 bis 14 als Mittel zur direkten Beleuchtung.

16. Verwendung der Lichterzeugungsvorrichtung nach einem der Ansprüche 1 bis 14 als Mittel zur Hinterleuchtung.

17. Verwendung der Lichterzeugungsvorrichtung nach einem der Ansprüche 1 bis 14 als Mittel zur Leuchtbeschilderung.

18. Vorrichtung zur Leuchtbeschilderung, insbesondere Leuchtschild, im besonderen Apothekenkreuz, **dadurch gekennzeichnet, dass** sie zumindest eine Lichterzeugungsvorrichtung nach einem der Ansprüche 1 bis 14 enthält.
